# EUROPEAN PATENT APPLICATION

(11) **EP 1 571 433 A2**
(43) Date of publication of application: **07.09.2005**
(21) Application number: 05004842.0
(22) Date of filing: 04.03.2005
(51) Int. Cl.: G01L 1/24, G01L 1/26

(54) **Load sensor mounting device with sensor-protective structure**

(30) Priority: 05.03.2004 JP 2004062723
(71) Applicant: DENSO CORPORATION, Aichi-pref. 488-8661 (JP)
(72) Inventor: Suzuki, Kyojiro c/o Denso Corporation, Kariya-city Aichi-pref., 448-8661 (JP)
(74) Representative: Kuhnen & Wacker

(57) **Abstract**

There is provided a device mounting a load sensor to an object to which load is applied. The device comprises a base having a predetermined longitudinal direction and a plurality of protruding interference members placed on he base 'along the direction. The protruding inference members are formed to have a sensor holding groove on the base. The load sensor is placed and held in the sensor holding groove. Each of the protruding interference members has a height lower than a top of the load sensor placed in the groove with no load applied. The load sensor is an optical-fiber sensor, for example.

## Description

### CROSS REFERENCES TO RELATED APPLICATIONS

The present application relates to and incorporates by reference Japanese Patent application No. 2004-62723 filed on March 5, 2004.

### BACKGROUND OF THE INVENTION

### (Field of the Invention)

The present invention relates to a device for mounting a load sensor such as an optical-fiber sensor, and in particular, to the device structured to protect the device from an excessive load applied to the sensor.

### (Description of the Related Art)

In variety of technical applications, load sensors have been used to detect loads to be applied to objects to be targeted. A typical type of load sensor is configured to deform in response to a load (e.g., impact) to be applied. The deformation provides a processing unit with information about the magnitude of the load that has been applied. Known load sensors include strain gauges and optical-fiber sensors, for example.

It has recently been proposed to mount these load sensors on a vehicle. For example, a pedestrian-protection device, which expands an airbag near the vehicle's hood for a pedestrian collided with the vehicle, is provided with a load sensor placed at the front of the vehicle. In this example, the load sensor acts as a sensor for sensing the vehicle colliding with a pedestrian (see, for example, Japanese application patent laid-open publication No. 2000-264146).

The pedestrian-protection device as described in the publication No. 2000-264146 may use load sensors which are provided at the front of the vehicle, such as in a space between the front-bumper cover and bumper lean force. In the collision, the load sensor can sense the load by deforming by being pressed by a counterpart material such as front-bumper cover provided in front of the load sensor.

Such a load sensor may receive a large load depending on the collision direction and collision object. When a vehicle collides with a high rigid structure, for example, such as an oncoming vehicle and a wall, an excessive load may be applied to the load sensor to cause an excessive deformation of the load sensor. This frequently gives rise to a problem such as the load sensor damage. The damaged load sensor needs to be replaced. The load sensor is, however, relatively expensive, resulting in the costly replacement.

### SUMMARY OF THE INVENTION

The present invention has been made in light of the above-described circumstances. An object of the present invention is to provide a load sensor mounting device which has the capability of protecting the load sensor from being damaged even when an excessive load is applied.

To accomplish the above object, as one aspect, the present invention provides a device mounting a load sensor to an object to which load is applied, comprising: a base having a predetermined longitudinal direction; and a plurality of protruding interference members placed on the base along the longitudinal direction and formed to have a sensor holding groove on the base, the load sensor being placed and held in the sensor holding groove and each of the protruding interference members having a height lower than a top of the load sensor placed in the groove with no load applied.

It is preferred that the load sensor is an optical-fiber sensor.

It is also preferred that the sensor holding groove is formed to have a bottom on the base, the bottom being formed into a concave/convex shape which provides pressuring portions arranged in a direction which the load sensor is laid.

In the load-sensor mounting device according to the present invention, the holding member for holding the load sensor includes an protruding interference member extending in the height direction of the mounting device. The protruding interference member includes a protruding edge that is provided at a position lower than the top of the load sensor.

In response to reception of load that occurs at a counterpart member, the counterpart member is moved to transmit the load to the load sensor mounting device. The counterpart member may first contact the top of the load sensor, and then move toward the load sensor to further press the load sensor. The pressed load sensor deforms in the height direction to detect the magnitude of the load applied.

When an excessive load occurs, the counterpart member moves toward the load sensor to press the load sensor more strongly. However, the movement of the counterpart member is interfered by the protruding edge of the protruding interference member. Thus the load sensor may receive no excessively applied load and not excessively deform, thereby preventing the load sensor damage.

It is noted that the protruding interference member includes a protruding edge that is provided at a position lower than the top of the load sensor, and the load sensor is allowed to deform by an amount corresponding to the difference between the load-sensor top and the height of the protruding edge of the protruding interference member, so that the load sensor can sense the load adequately.

For the load sensor that is the optical-fiber sensor, it is known that the load sensor is likely to be damaged due to the above-mentioned excessive load. In the load-sensor mounting device according to the present invention, the protruding interference member of the holding member can prevent an excessive deformation of the load sensor as described above, so that the optical-fiber sensor is much less likely to be damaged.

When load is applied to the load sensor mounting device, the load sensor is sandwiched between the counterpart material and holding member. A pressuring portion provided in the sensor holding groove of the holding member may decrease the area of the load sensor that contacts the holding member, so that the same force applied to the load sensor may provide the higher pressure (force per unit area) applied to the load sensor and amplify the load applied to the load sensor. The load sensor can thus sense more reliably the load applied to it, even when the protruding interference member includes the higher protrusion height to allow the load sensor to deform to a lesser extent, for example. In particular, when the optical fiber is used as the load sensor, the pressuring portions arranged in the direction that the load sensor is laid can effectively amplify the load applied to the load sensor.

As another aspect of the present invention, there is a load sensor mounting structure formed on a base member of an object to which load is to be applied, the base member having a predetermined longitudinal direction. The mounting structure has a plurality of protruding interference members placed on the base member along the longitudinal direction and formed to have a sensor holding groove on the base member, the load sensor being placed and held in the sensor holding groove and each of the protruding interference members having a height lower than a top of the load sensor placed in the groove with no load applied. This mounting structure also enjoys the identical advantages to those described in the foregoing. Since the base member is in common with a component of the object employing the structure, the production cost can be saved and the attachment can be easier.

### BRIEF DESCRIPTION OF THE DRAWINGS

In the accompanying drawings:
Figure 1 schematically shows an exploded perspective view of a load sensor mounting device according to an embodiment of the present invention;
Figure 2 schematically shows an enlarged cross sectional view of the substantial part of the load sensor mounting device under no-loaded condition; and
Figure 3 schematically shows an enlarged cross sectional view of the substantial part of the load-sensor mounting device under loaded condition.

### DETAILED DESCRIPTION OF THE PREFERRED EMBODIMENTS

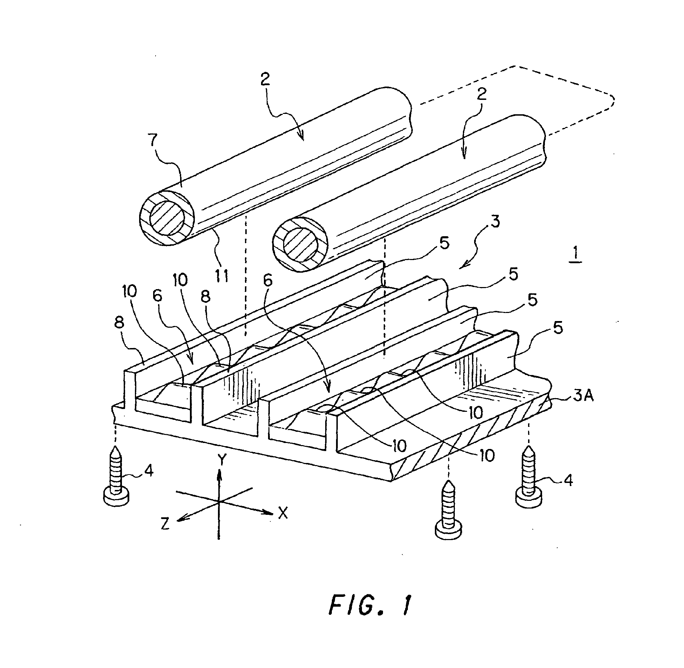

With reference to Figures 1 - 3, a load sensor mounting device (or unit) according to the present invention will now be outlined before entering the detailed description of an example of the load sensor.

Figure 1 shows a load sensor mounting device 1 according to the present invention and a load sensor 2 (such as optical fiber sensor) according to the present invention. The load sensor 2 includes any types of sensors as long as they are able to output a signal indicative of the magnitude of a load. Known sensors, such as strain gauges, can be used as the load sensor 2. The strain gauge can output an electrical signal depending on the magnitude of a load to be applied. The optical fiber sensor is also able to respond to load to be applied to output an optical signal in which the magnitude of the load is reflected. Of course, one or more load sensors can be provided.

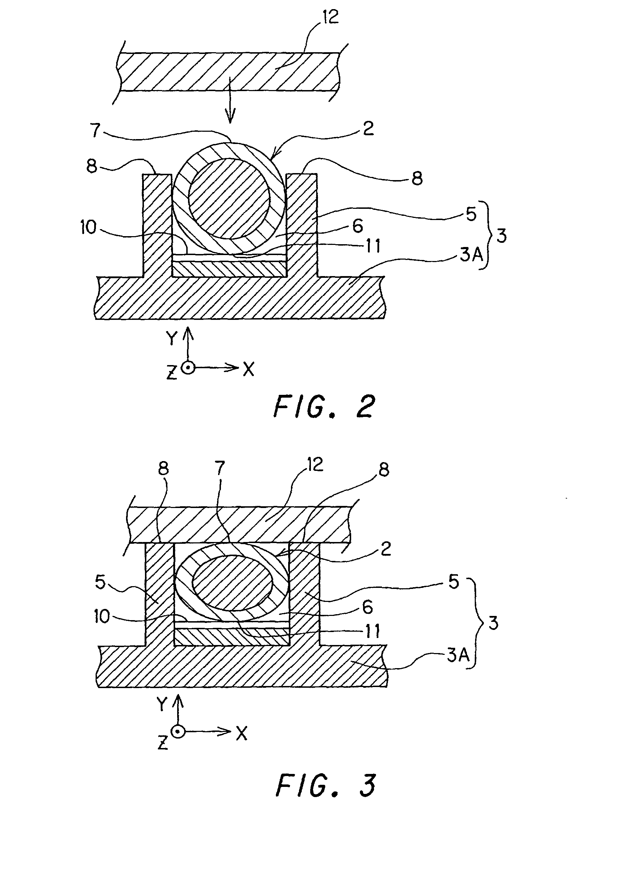

By way of example, the load sensor mounting device 1 includes the holding member 3 for holding the load sensor 2. This holding member 3 is formed to sandwich the load sensor 2 with a counterpart member (not shown in Figure. 1; refer to a reference 12 in Figures. 2 and 3), when being mounted to sense load to be applied to the counterpart member.

The holding member 3 includes a protruding interference member 5 built on a base portion except the sensor holding groove facing the bottom of the load sensor 2. The protruding interference member 5 may protrude in the height (diameter) direction of the device 3 (i.e., the Y-direction in Fig. 1) and has a protruding end located at a position lower than an outer top (surface) 7 of the load sensor 2. An outer bottom (surface) 11 of the load sensor 2 refers to the portion of the load sensor 2 that resides on the holding- member side. The top of the load sensor 2 refers to the portion of the load sensor that resides opposite the holding member, in other words, on the counterpart-material side. The height direction of the load sensor 2 refers to the direction in which the bottom of the load sensor is the lower surface and the top is the upper surface.

The protruding interference member 5 may be any shape that can interfere with an excess movement of the counterpart member in the load-sensing direction. The protruding interference member can be shaped in an upstanding wall-like shape or other shapes such as a column-like shape, for example. At least the protruding interference member of the holding member 3 may be formed of a material that is sufficiently rigid enough to interfere with the movement of the counterpart member. Such a sufficiently rigid material is preferably PBT resin and the like, for example. One or more protruding interference members may be provided.

The sensor holding groove of the holding member 5 formed in a concave/convex shape which includes the arrangement of the pressuring portions protruding toward the load sensors may provide an advantage that the amplified load can be sensed, as described above. The pressuring portion may be any protruding shape. The spacing between the adjacent pressuring portions and the size of the protruding-edge portion of the pressuring portion and the like can be set properly according to such as the shape and intended use of the load-sensor mounting device. The optical-fiber sensor can be used as the load sensor with the pressuring portions arranged in the direction that the load sensor is laid, more specifically, in the direction that light passes through the optical-fiber sensor, to apply the load to the same optical-fiber sensor at a plurality of points to amplify the load more efficiently.

The holding member can hold the load sensor in various ways, such as adhesion, welding, screwing, and catching by a catching part for catching the load sensor provided on the bottom holding surface of the holding member.

It is noted that the load sensor mounting device according to the present invention is not limited to the above-mentioned passenger-protection device, and can be used as the load sensor mounting device for use in various devices.

### (Detailed embodiment)

Referring to Figs. 1 - 3, a detailed example of the load sensor mounting device 1 shown in above will now be provided.

In the present embodiment, the load sensor mounting device 1 is applied to mounting of the load sensor 2 which is reduced to an optical-fiber sensor (hereinafter noted as the "optical fiber sensor 2").

Figure 1 schematically shows an exploded perspective view of the load sensor mounting device 1 in the present embodiment, Figure 2 schematically shows an enlarged cross sectional view of the substantial part of the load sensor mounting device 1 under a no-loaded condition, and Figure 3 schematically shows an enlarged cross sectional view of the substantial part of the load sensor mounting device 1 under a loaded condition.

The load sensor mounting device 1 according to the present embodiment includes, as stated above, the holding member 3 and attachment pieces 4 used to attach the device 1 to an objective member or apparatus to which load is applied when a collision occurs, for example.

The holding member 3 consists of a base 3A and a plurality of protruding interference members 5 rigidly formed with the base 3A and also formed to protrude from the base 3A in the longitudinal direction (the Y-direction) of the holding member 3. Each of the protruding interference members 5 extends in the back-and-forth direction (the Z-direction) of the holding member 3 and serves as an upstanding wall. As shown in Fig. 1, the plurality of protruding interference members 5 are arranged in the X-direction such that the members 5 respectively extends along the Z-direction and are substantially parallel to each other.

An optical-fiber sensor 2 is held in every other space formed between two adjacent protruding interference members 5 of the holding member 3. A sensor holding groove 6 is provided as a space formed between two adjacent protruding interference members 5, into which the optical-fiber sensor 2 is placed. Thus, the optical-fiber sensor 2 extends in the Z-direction and turns back at one end or at both ends of the holding member 3 in the Z-direction so that the sensor 2 is held in the adjacent sensor holding grooves 6. Each of the protruding interference members 5 is designed such that the top (surface) 7 of the optical-fiber sensor 2 placed on the holding member 3 is positioned higher than the top ends 8 of the protruding interference members 5, as shown in Figure 2. With taking it account various design conditions including the dimensions of the optical-fiber sensor 2, the height of each protruding interference member 5 can be set to an appropriate limit value that can avoid the sensor 2 from being broken down, even when receiving an application of an excessive load of which magnitude is higher than a predetermined value.

The optical-fiber sensor 2 has both ends, one of which being connected to a not-shown light-emitting means and the other end being connected to a not-shown light-receiving means. The light-emitting means radiates light to the optical-fiber sensor 2, which passes through the optical-fiber sensor 2 and is detected by the light-receiving means.

Each of the sensor holding grooves 6 is formed to have a bottom with pressuring portions 10 between two protruding interference members 5. That is, the bottom of each of the pressuring portions 10 has protrusions which extend in a lateral direction (i.e., the X-direction). The pressuring portions 10 are formed to protrude upward to face (touch) the bottom (surface) 11 of the optical-fiber sensor 2 to be inserted into the sensor holding grooves 6.

Each of the bottoms of the sensor holding grooves 6 is thus formed in a wavy concave/convex shape which includes a convex portion that provides the pressuring portions 10 and a concave portion that is a space between pressuring portions 10. The optical-fiber sensor 2 is placed into the sensor holding grooves 6 so that the bottom 11 of the sensor 2 is touched to the pressuring portions 10 of each sensor holding groove 6.

When load is applied to an apparatus in which the optical-fiber sensor 2 mounted as above to the counterpart member 12 is incorporated, the counterpart member 12 first comes into contact with the top 7 of the optical-fiber sensor 2. The counterpart member 12 then moves toward the optical-fiber sensor 2 in the downward direction shown by an arrow in Figure 2, and then immediately presses the optical-fiber sensor 2 along the arrow to cause a deformation of the sensor 2.

This deformation interferes with light passing through the optical-fiber sensor 2 so that the intensity of the light detected by light-receiving means is reduced. Thus the magnitude of the load can be detected from a difference between the light intensity radiated by the light-emitting means and the light intensity detected by the light-receiving means.

When an excessive load is applied to the counterpart member 12 in the present embodiment, the counterpart member 12 may be forced to move toward the optical-fiber sensor 2 beyond a certain allowable level. If the optical-fiber sensor 2 actually receives such an excessive movement of the counterpart member 12, the sensor 2 would also be deformed excessively. This frequently gives rise to a breakage or a malfunction at the sensor 2, if it occurs actually.

However, in the present embodiment, the protruding interference members 5 protruding from the base 3A of the holding member 3 work to protect the optical-fiber sensor 2 from such an excessive load. That is, the counterpart member 12 is obliged to stop moving toward the sensor 2 any more, when the counterpart member 12 contacts the top ends 8 of the protruding interference members 5, as shown in Figure 3. Namely the counterpart member 12 is blocked by the protruding interference members 5, which thus avoiding the counterpart material 12 from further pressing the optical-fiber sensor 2. It is therefore possible to prevent the cause of an excessive deformation at the optical-fiber sensor 2.

In this way, the load sensor mounting device 1 according to the present embodiment is able to prevent the load sensor from being damaged or malfunctioning, even when the excessive load is applied to the sensor 2.

A modification of the foregoing embodiment will now be described. This modification is concerned with the structure itself of the load sensor mounting device. In the foregoing embodiment, the load sensor mounting device has been descried as a sole unit. However, this is not a decisive list. As a modification, this device can be mounted on a vehicle such that part of the device is in common with a component of the vehicle. For example, the base 3A shown in Figure 1 may be the front plate of a bumper (or bumper reinforcement) mounted in the vehicle. In such a case, the front plate functions as a common member for both the bumper lean force and the load sensor mounting device according to the present invention. Of course, the base 3A is not confined to the bumper member.

In this structure of which components are partly common with an object (e.g., vehicle) in which the load sensor mounting device is mounted, the present invention is reduced into practice as a load sensor mounting structure. That is, this structure is formed on a base member of an object to which load is to be applied, the base member having a predetermined longitudinal direction, and has a plurality of protruding interference members placed on the base member along the longitudinal direction and formed to have a sensor holding groove on the base member, the load sensor being placed and held in the sensor holding groove and each of the protruding interference members having a height lower than a top of the load sensor placed in the groove with no load applied.

The present invention may be embodied in several other forms without departing from the spirit thereof. The present embodiments and modifications as described are therefore intended to be only illustrative and not restrictive, since the scope of the invention is defined by the appended claims rather than by the description preceding them. All changes that fall within the metes and bounds of the claims, or equivalents of such metes and bounds, are therefore intended to be embraced by the claims.

## Claims

1. A device mounting a load sensor to an object to which load is applied, comprising:
a base having a predetermined longitudinal direction; and
a plurality of protruding interference members placed on the base along the longitudinal direction and formed to have a sensor holding groove on the base, the load sensor being placed and held in the sensor holding groove and each of the protruding interference members having a height lower than a top of the load sensor placed in the groove with no load applied.

2. The device according to claim 1, wherein the load sensor is an optical-fiber sensor.

3. The device according to claim 2, wherein the sensor holding groove is formed to have a bottom on the base, the bottom being formed into a concave/convex shape which provides pressuring portions arranged in a direction which the load sensor is laid.

4. The device according to claim 2, wherein the top of the optical-fiber sensor has a round outer surface providing the top when the optical-fiber sensor is placed in the groove.

5. The device according to claim 2, wherein the sensor holding groove is two or more in number and the optical-fiber sensor is one in number and is placed in the two or more sensor holding grooves in common, the optical-fiber sensor turning at an end of the base in the longitudinal direction.

6. The device according to claim 2, wherein each of the sensor holding grooves is formed by two of the protruding interference members, the two protruding interference members being built on both sides of each sensor holding groove along the longitudinal direction.

7. The device according to claim 1, wherein the height of each protruding interference member is set to a limit value that avoids the load sensor from being broken down, the load sensor placed and held in the sensor holding groove being deformed in response to the load to be applied.

8. A load sensor mounting structure formed on a base member of an object to which load is to be applied, the base member having a predetermined longitudinal direction, wherein the mounting structure has a plurality of protruding interference members placed on the base member along the longitudinal direction and formed to have a sensor holding groove on the base member, the load sensor being placed and held in the sensor holding groove and each of the protruding interference members having a height lower than a top of the load sensor placed in the groove with no load applied.

9. The structure according to claim 9, wherein the load sensor is an optical-fiber sensor.

10. The structure according to claim 9, wherein the sensor holding groove is formed to have a bottom on the base, the bottom being formed into a concave/convex shape which provides pressuring portions arranged in a direction which the load sensor is laid.

11. The structure according to claim 9, wherein the top of the optical-fiber sensor has a round outer surface providing the top when the optical-fiber sensor is placed in the groove.
